# EUROPEAN PATENT SPECIFICATION

(11) **EP 1 745 673 B1**
(45) Date of publication and mention of the grant of the patent: **13.07.2016**
(21) Application number: 05741244.7
(22) Date of filing: 09.05.2005
(51) Int. Cl.: H04W 8/26

(54) **METHOD AND SYSTEM FOR DEVICE DISCOVERY**
VERFAHREN UND SYSTEM ZUR GERÄTE-ENTDECKUNG
PROCEDE ET SYSTEME D'IDENTIFICATION D'APPAREIL

(30) Priority: 11.05.2004 SE 0401242
(43) Date of publication of application: 24.01.2007
(73) Proprietor: Giesecke & Devrient GmbH, 81677 München (DE)
(72) Inventor: SVENSSON, Britt-Mari, S-192 74 Sollentuna (SE)
(86) International application number: PCT/SE2005/000672
(87) International publication number: WO 2005/109947

(56) References cited:
- EP-A- 0 891 111
- WO-A-03/019797
- US-A1- 2002 078 185
- US-B1- 6 223 028

## Description

### TECHNICAL FIELD

The invention is concerned with a method and system for discovering new devices in a device management system in a mobile telecommunication network, the system comprising a device management server side application, a device management user client side application and databases.

### BACKGROUND

GSM, together with other technologies, is part of an evolution of wireless mobile telecommunication. The Global System for Mobile Communication (GSM) is a standard for digital wireless communications with different services, such as voice telephony. The Subscriber Identity, Module (SIM) inside GSM phones was originally designed as a secure way to connect individual subscribers to the network but is nowadays becoming a standardized and secure application platform for GSM and next generation networks.

The Mobile Station (MS) represents the only equipment the GSM user ever sees from the whole system. It actually consists of two distinct entities. The actual hardware is the Mobile Equipment (ME), which consists of the physical equipment, such as the radio transceiver, display and digital signal processors. The subscriber information is stored in the Subscriber Identity Module (SIM), implemented as a Smart Card.

With respect to the terminology used in this document, The Mobile Station (MS) includes the Mobile Equipment (ME) and the Subscriber Identity Module (SIM). The term "Handset" is used as a synonym to the Mobile Equipment (ME) and the term "Device" as a synonym to The Mobile Station (MS).

The mobile equipment is uniquely identified by the International Mobile Equipment Identity (IMEI) being a unique code that corresponds to a specific GSM handset. The SIM card contains the International Mobile Subscriber Identity (IMSI), identifying the subscriber, a secret key for authentication, and other user information.

The term "device identity information" comprises in the context of this document both equipment information, such as the IMEI, and subscriber information, such as the MSISDN or IMSI. The IMEI and the IMSI or MSISDN are, however, independent and can thereby provide personal mobility.

The Mobile Station Integrated Service Digital Network Number, MSISDN, is the standard international telephone number used to identify a given subscriber. The operator declares the subscription in a database inside the network, which holds the correspondence between the IMSI and the MSISDN. By inserting the SIM card into another GSM terminal, the user is able to receive and make calls from that terminal, and receive other subscribed services.

Advanced mobile services such as browsing, multimedia messaging, mobile e-mail, and device management can only be used if a mobile phone is configured correctly. However, many customers do not know how to configure their device. Operators must ensure that device configuration is quick and easy for the customer. This process of managing device settings and applications is called device management.

A device management session includes e.g. authentication (user verification), device inventory (a device management application read which parameters and applications are installed in the telephone for future decisions, such as e.g. updating, adding and deleting things from the installations), continuous provisioning (a device management application e.g. updates parameters on the telephone device, sends applications to the device, performs software and firmware updates), device diagnostics (error finding), etc.

Sending new settings over the air is one simple way to provision a device with configuration parameters, such as connectivity information (device settings). After receiving the settings to configure the phone, the customer simply saves them to the phone and is then able to use the services. For the operator, simplifying access to advanced services can bring higher usage rates, new revenue streams, and reduced customer helpline costs.

When a mobile terminal attaches to the network, it sends a signal to the network containing both IMSI end IMEI information. The Swedish patent applications 0302626-7 and 0303210-9 of the applicant present improved solutions for introducing a new terminal or SIM to the network.

Even if mobile terminals basically are devices for sending voice and data through radio signals, they are available with a wide variety of standards and/or proprietary technology support. Different characteristics to be considered in communications with mobile terminals are e.g. standards, technologies, bandwidth constraints, mobile application characteristics, network functionality etc.

The Swedish patent application 0303606-8 of the applicant presents solutions for provisioning of devices by downloading data to them over the air.

As a result of technological development, networked and mobile/wireless devices are becoming more and more complex, and consequently, connected devices are also becoming more and more difficult to manage. Consumers and operators therefore need a tool for managing devices conveniently and effectively. Device management standardization has previously been widely distributed among different standardization bodies, but real technology development has not yet been done. The SyncML initiative has identified the complexity of this issue, and the importance for finding a universal solution for a device management protocol. SyncML is the open standard that drives data mobility by establishing a common language for communications between devices, applications and networks. The foundation of the SyncML open standard, SyncML Data Sync (SyncML DS) ensures a consistent set of data that is always available on any device or application, any time.

Device management is the generic term used for technology that allows third parties to carry out the difficult procedures of configuring mobile devices on behalf of the end users. There are numerous cases, wherein device management is needed such as new device purchase, remote service management, software download, changing and adding services, and service discovery and provisioning etc.

SyncML Device Management (SyncML DM) enables management of devices and applications, simplifying configuration, updates and support. Sponsored and supported by leading wireless companies, the SyncML initiative accelerates the development and market success of SyncML DS and SyncML DM technologies.

SyncML Device Management Protocol (SyncML DM) is thus a standard for communication between devices and device management server systems. The standardization body is OMA, Open Mobile Alliance. The device to be managed is equipped with a SyncML user agent in the device (i.e. terminal or handset) that speaks the SyncML DM language.

Device management applications are typically used by mobile service providers. They are used for customer care purposes and to increase revenue by effective value added service management. Example use-cases involve service- and settings provisioning, device diagnostics, statistics, firmware upgrade and software upgrade.

Before any device management sessions can start, the device management applications need to be informed about the devices to be managed. The devices also need to be provisioned with the accurate connectivity parameters for the device management application. This is an ongoing process as new devices keep appearing in the network, and is in this document referred to as "device discovery".

The device management application has no means to itself discover new devices that are supposed to be managed. Instead it must be informed of new devices. The device management application has to be informed of the identity, address or phone number of the device, which can be achieved in many ways.

Whether at point-of-sale, via a self-service web site, or by e.g. network triggering, each possible method for device discovery actually imposes its own set of problems for the device management application. Some are discussed below:
Usually, the device management application must wait until a subscriber decides to initiate a session and do self-management. If no session is actively initiated by the subscriber, the device is never discovered!

Sometimes, discovered devices cannot be alerted. The device management application in use does not have any channel for OTA communication and therefore would need a device discovery mechanism that takes care of management alert to be able to alert the device.

Sometimes discovered devices are not bootstrapped with correct settings. In that case, discovered devices cannot communicate with the device management application. The device management application might even dismiss them as wrongfully discovered devices.

In some cases, a device may be known at subscription- and/or handset point-of-sale, but later on, the subscriber changes to another handset. Then the device management application can be left with an inaccurate combination of handset identity and destination address.

A further problem arises when at subscription point-of-sale, the handset model or identity is unknown.

A device can also be discovered too late. The device management application receives device discovery notifications by logistic means, e.g. batch file updates or similar, but that can occur at a later point in time than when the new device actually appears in the network. This imposes a logistical problem since it is valuable to "catch" the new device immediately and start managing it.

Sometimes, irrelevant devices are discovered. In such a case, the device management application is informed of all sorts of irrelevant devices that are not even equipped with a device management user agent.

US 2002/0078185 discloses a method for configuring a mobile phone. According to this document the mobile phone is preconfigured with a phone number that leads to a so-called start site. When a customer buys the mobile phone the first thing he does in order to configure it for digital services is to make an ordinary call to the preconfigured phone number. The start site interacts, via client software, with the mobile phone and the customer to obtain required information. The customer is requested to select a network operator from a list of network operators. Typically the customer is also asked if he/she wants to configure "wireless e-mail". The customer answers the questions and the corresponding information is transmitted to the start site. The start site assembles this information with information already existing in its database and composes a configuration message which it transmits to the mobile phone. On receipt of the configuration message the mobile phone will present the question "Do you accept your phone is configured by the information contained in this message? YES/NO?". If the customer answers "YES" software within the mobile phone will automatically configure the phone.

WO 03/019797 discloses several methods for configuring a mobile phone by downloading initial operational parameters to the mobile phone using a radio link. The initial operational parameters are down-loaded using a data call connection formed with the mobile phone. A data message, such as a Short Message Service (SMS) message, is sent to the mobile phone. The data message requests the mobile phone to initiate a data call connection with a server that contains (or has access to) the initial operational parameters. The mobile phone forms a data call connection with the server and receives the initial operational parameters.

US 6 223 028 discloses a method for configuring a mobile phone over the air within a mobile communication network. The mobile communication network includes an over-the-air function, a customer service center, a mobile switching center, a base station controller, and multiple base transceiver stations. The over-the-air function, using the mobile switching center, the base station controller, and one of the base transceiver stations for transport, initially sends a request over the air to a mobile phone within the mobile communication network to interrogate the mobile phone's proto-col capability. In response to the request, the mobile phone sends a protocol capability response message over the air back to the over-the-air function. The protocol capability response message includes data that describes the band and mode capability information of the mobile phone and that describes the service options supported by the mobile phone.

### OBJECT OF THE INVENTION

The object of the invention is to develop methods and systems to discover new devices to be managed and to facilitate the initiating of device management sessions.

### SUMMARY OF THE INVENTION

The above object is achieved by a method according to claim 1. Preferred embodiments are defined in the dependent claims.

The method of the invention for discovering new devices in a device management system in a mobile telecommunication network, wherein the system comprises a device management server side application and a device management client side application and databases, is mainly characterized by the combined steps of detecting a new device active in the mobile network, detecting information of handset capabilities of said device, downloading of update information to said device on the basis of the terminal capabilities of said new device, and alerting said device to connect to the device management server in order to start a device management session.

The device management system of the invention is mainly characterized by a component for detection of new devices active in the mobile network, a database implementing a device identity repository, a database implementing a repository of handset capabilities, a component for downloading update information to devices in the network, and a component for server initiated management alert.

The preferable embodiments of the method of the invention are presented in the subclaims.

A preferred embodiment of the invention is developed as a three-step mechanism in order to address the problems involved with device discovery. The invented mechanism is referred to as *True Device Discovery.* To achieve *True Device Discovery,* a three-step cross-technological combination of processes is required. The three steps in this preferred embodiment are:
- The first step, which is a device switch detection step, with which a new device is detected.
- The second step, which is a process for an adaptive over-the-air (OTA) provisioning of handsets, with which it is determined by the use of a handset capabilities database if the new device supports a device management servicel and if that is the case, the new device is provisioned with connectivity parameters for the device management service(s).

The third step, which is a process for server initiated management alert and with which said device is alerted to connect to the device management application in order to start a management session.

These three steps concludes the preferable method of True Device Discovery with which only active, relevant and correctly configured devices are discovered. An addition, as part of the True Device Discovery method the first management session has already been initiated.

Several technologies, in terms of data encoding- and transport protocols, are involved, and the joint combination of said three steps is a new approach.

Actually, the two first steps are implemented by technology and mechanisms invented previously and described in the Swedish patent applications 0302626-7, 0303210-9 and 0303606-8 of the applicant, the former two applications describing alternative solutions for the first step and the latter application describing a solution for the second step. All of them are significant inventions in themselves.

The first step is most preferably concerned with a method for detection of device switch by the use of a dynamic device identity comprising the pair: subscription and handset identity. Each time the handset is switched on, a device management application program (DMA) running on SIM checks in what handset the SIM resides. A Handset Switch Detection (HSD) function is achieved by reading the IMEI entity of the handset and storing it in persistent memory on the SIM. When a handset switch is detected, the application program implements the first step of the *True Device Discovery* function by transmitting information about the handset change to the server side True Device Discovery application over the mobile network. The system component uses the Device Identity Repository (DIR) to look up whether the detected device is in fact a new device.

The fist step might also be concerned with another method for detection of handset switch. By probing equipment in the mobile bearer network by detecting a location update signal sent from the mobile subscriber terminal when the terminal is attaching the network, triggers revealing handset and subscription identity are generated. The HSD part of True Device Discovery is in this embodiment implemented by a system component that keeps track of occurred handset switches.

The second step is concerned with a method for downloading data to mobile devices, i.e. for provisioning mobile devices with device settings Over-the-air. Update information is downloaded for bootstrapping devices with connectivity parameters as a consequence of device switch detection. The handset capability based policy for bootstrapping fulfills the second part of the invented mechanism for *True Device Discovery.*

All new devices detected in said first step are "discovery-candidates" only. During the process of said second step it is discovered if the device is capable of device management, and if so it is provisioned with connectivity parameters for the device management service(s) of concern, i.e. bootstrapped. If a device is not capable of any device management protocol, it should not be "truly discovered" because it is then irrelevant to the device management application that uses the system of the invention. Any new devices detected that are not capable of any device management protocols are in the preferable embodiment disqualified from True Device Discovery as a consequence of said second step.

After the second step, the discovered device is able to establish a connection to a device management application. It is prepared and ready to carry out management sessions.

Newly discovered devices must be alerted to start a device management session. In prior art solutions, a device management application just had to wait for the end-user to pro-actively initiate a device management session. The idea of this *True Device Discovery* invention is instead that the first device management session is initiated "automatically" as part of the device discovery. Thereby the mobile service provider can start managing the device immediately and for example provision it with information, settings or applications.

When a new device has been truly discovered, i.e. found active in the mobile network and relevant for device management according to the first two steps, it is alerted to connect to the device management application and start a management session.

The technology used for the server initiated management alert can e.g be the one specified in the suite of specifications for SyncML DM. The management alert may origin from a different server than the actual device management application server.

As a summary, it is concluded that in the preferable method of the invention
- In the first step, a new device is detected in a mobile network. The detected new device is a candidate for *True Device Discovery.*
- In the second step, the new device is bootstrapped with device settings for device management service(s) if it is determined that the new device is capable of any device management protocol(s). Any other devices are sorted out and disqualified from *True Device Discovery.*

In the third step, a server initiated management alert is sent out to the device.

The benefits of the invention, *True Device Discovery,* are presented by the following statements. By the invented mechanism, discovered devices are in fact
- "Alive" at discovery and detected with an active subscription in the mobile network
- Capable of device management at discovery and equipped with a device management client in the device.
- Bootstrapped at discovery and able to carry out device management sessions immediately
- In session ,at discovery as a device management session has already been initiated and management of the discovered device can proceed immediately.

In the following, the invention is described in detail by means of some preferable embodiments by referring to figures. The invention, which is defined by the scope of the patent claims is not restricted to the details of the following presentation.

### FIGURES

Figure 1 is a view of a prior art target environment without the invention
Figure 2 is a view of an environment that includes the entities that implements the method of the invention
Figure 3 is a signal diagram of the method of the invention

### DETAILED DESCRIPTION

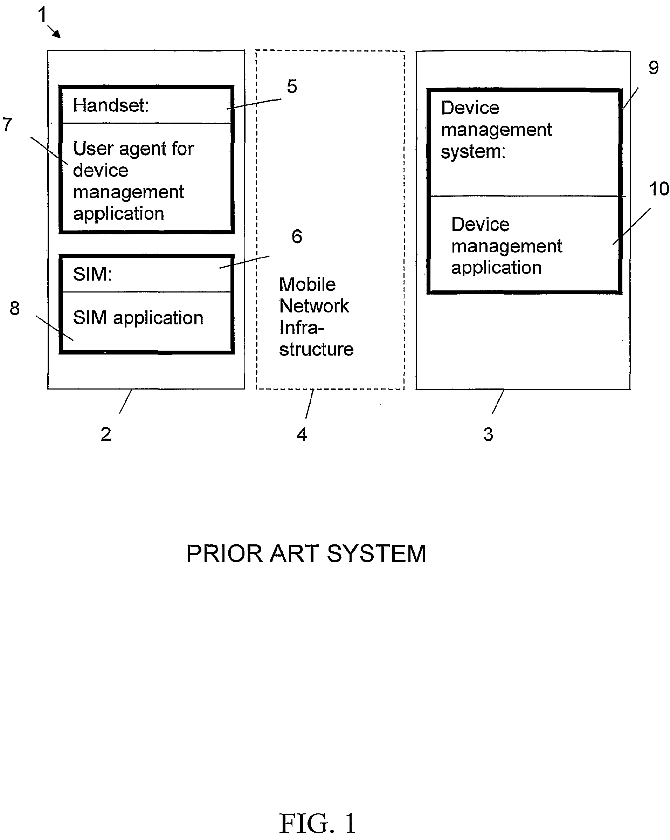

Figure 1 is a view of a prior art target environment without the invention. The target environment is presented as an example of a telecommunication network 1 in which the invention can be used. The telecommunication network 1 comprises one or more devices to be managed, of which one device 2 and a device management server 3 can be seen in figure 1. The device 2 to be managed is in this example a mobile device 2 belonging to the mobile network infrastructure 4.

The Mobile Station (MS) (= The device) represents the only equipment the GSM user ever sees from the whole system. It actually consists of two distinct entities. The actual hardware is the Mobile Equipment (ME) (=handset) marked with reference number 5 in figure 1, which consists of the physical equipment, such as the radio transceiver, display and digital signal processors. The subscription information is stored in the Subscriber Identity Module (SIM), marked with reference number 6 in figure 1, implemented as a Smart Card.

In this context, mobile network infrastructure includes all components and functions needed for mobile data communication, both GSM and internet included. The mobile device, in turn, includes both the handset 5 and the SIM card 6. Thus, the mobile device 2 thus has access to the mobile network infrastructure 4.

SyncML Device Management Protocol (SyncML DM) is one standard for communication between devices and applications in device management systems. If this standard is used, the device to be managed, i.e. the mobile station 2 in figure 1, is equipped with a SyncML user agent 7 in the device 2 that speaks the SyncML DM language. With other device management protocols, the user agent 7 is a user client for the particular device management application used in the device management system 9.

Thus, the device management system 9 has a device management application 10 using a device management protocol, which e.g. can be SyncML DM, which is typically used by mobile service providers. They are used for customer care purposes and to increase revenue by effective value added service management. Example use-cases involve service- and settings provisioning, device diagnostics, statistics, firmware upgrade and software upgrade.

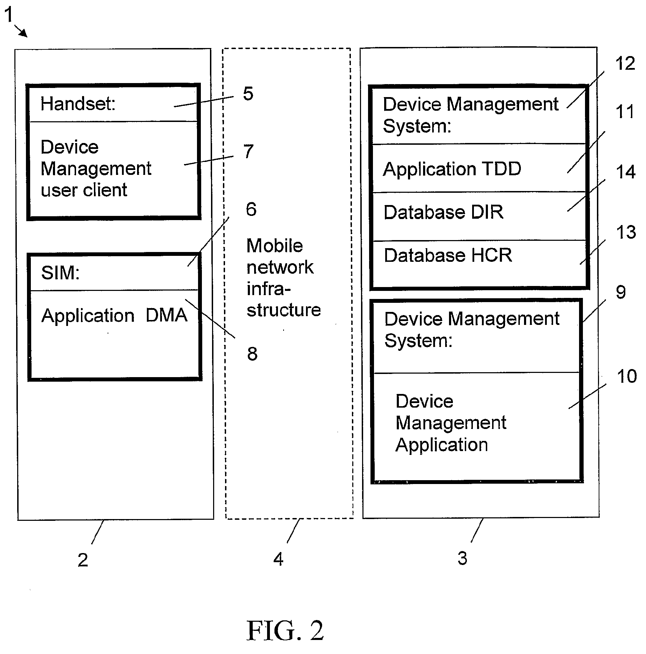

Figure 2 is a view of an environment that includes the entities that implements the method of the invention in addition to those presented in figure 1. The system 1 in figure 2 comprises components residing on both the mobile device 2 in figure 2 and on the server side 3 in figure 2.

Each time the handset is switched on, a Device Management Application program (DMA), having reference number 8 in figure 2 and running on SIM, checks in what handset the SIM resides. The DMA is thus a component with which a new device active in the mobile GSM network is detected, with which a new device active in the mobile GSM network is detected. It resides as an application program on the SIM card 6 in the device 2 by transmitting information about handset changes to a server side component over the mobile network. This server side component is the True Device Discovery (TDD) application 11 in the Device Management application 12 of the invention in the server 3. The DMA 8 and the TDD 11 communicate over the mobile network (GSM) 4.

HCR is short for Handset Capability Repository and has the reference number 13 in figure 2. It contains lists of terminal capabilities. All handset models in the mobile network are listed in the HCR. One of the capabilities included in the HCR is whether the handset 5 in figure 2 supports a device management protocol, e.g. SyncML DM, i.e. is equipped with a SyncML DM user agent 7 in figure 2.

The Device Identity Repository (DIR) database contains pairs of subscription identity and handset identity and has the reference number 14 in figure 2. A device is not identified by either entity itself, both are required. The subscription and handset identities in DIR are IMSISDN, IMEI and alternatively IMSI values, IMEI meaning the International Mobile Equipment Identity being a unique code that corresponds to a specific GSM handset. The Mobile Station Integrated Service Digital Network Number, MSISDN, is the standard international telephone number used to identify a given subscriber. IMSI is the Mobile Subscriber Identity.

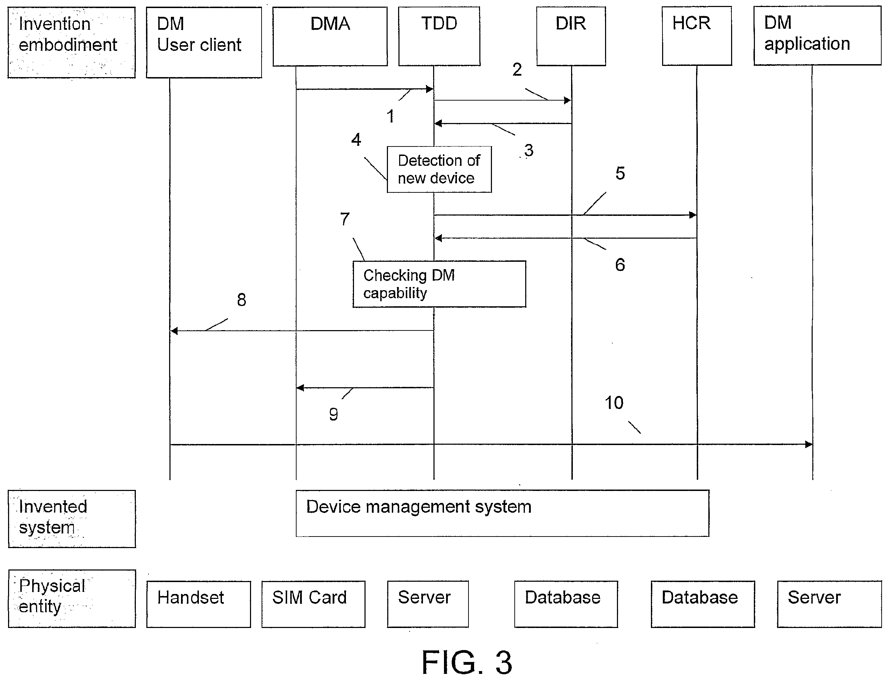

An example of an embodiment of the method of the invention is presented in form of a signal diagram in figure 3.

Figure 3 shows on the lowest row, the physical entities taking part in the method of the invention. These are the handset and the SIM card, the server, and the two databases DIR and HCR described above. The device management system of the invention comprises the DMA (a SIM application), TDD (a server application in the Device Management System), DIR (a server database) and HCR (a server database). Further applications are the device management client in the handset and the device management application in the server-side.

It is assumed that the user of a mobile device has changed his handset but kept his old SIM card and transferred it to the new handset. When the handset with the SIM card is switched on, a signal is sent, as signal 1 of figure 3, from an application running on the SIM, i.e. the Device Management Application (DMA) (presented in figure 2) to the True Device Discovery (TDD) application. Signal 1 contains device information, i.e. both handset and subscription information consisting of the IMEI, MSISDN and/or IMSI as described earlier.

The TDD checks in the Device Identity Repository (DIR) database containing pairs of MSISDN (alternatively IMSI), and IMEI values, whether the device or subscription is new with the read request signal 2. The information is given by signal 3 back to the TDD application.

If the TDD application considers on the basis of the IMEI, MSISDN and/or IMSI comparison e.g. that the detected device is a new device, then it has discovered a new device that is now a candidate for the subsequent steps of the method of the invention. Preferably the new device identity is stored in DIR right away as step 4 in figure 2.

Thereafter the TDD application checks, by requesting information with signal 5 and getting it with signal 6 of figure 3 from the Handset Capability Repository (HCR), which capabilities the new device has, with respect to over-the-air provisioning protocols and the device management protocol(s). The HCR has lists of handset capabilities of all existing handset models in the network stored there by the operator earlier. The TDD application derives, on the basis of said IMEI, which handset model the new device is.

As an example, it could be checked in step 7 of figure 3 whether the device has SyncML DM capabilities. The process goes further if these capabilities exist and depending on what protocols the device management system supports, if any supported device management protocol capabilities exist.

Depending on handset model and on the basis of the capability information read from HCR, the new device is provisioned with connectivity parameters and security credentials for device management presented with signal 8 of figure 3. The device is said to be "bootstrapped" with connectivity parameters. Bootstrap is e.g. embodied by using an Over-The-Air provisioning protocol. The purpose of bootstrapping devices is that they shall be able to connect to the application, particularly device management application, as indicated with signal as indicated with signal 10 in figure 3.

The device is now after step 8 able to establish a connection to a device management application and it is prepared and ready to carry out management sessions. Newly discovered devices, however, must be alerted to start a device management session. Therefore, as the final step of the method of the invention, the first device management session is initiated (automatically) as soon as the device is discovered. Thus, in signal 9 of figure 3, the TDD application provisions the device with an alert that requests the device management client in the device to initiate a device management session with the device management application.

Signal 10 shows the connection of the device to the device management application. Signal 11 is included here to describe the resulting state of the method of the invention.

## Claims

1. Method for discovering new devices in a device management system in a mobile telecommunication network (1), the system comprising a device management server side application (11), a device management client side application (8), and databases (13,14), wherein the method comprises the following steps in combination
a) the client side application (8) running on a subscriber identity module, SIM (6), detecting a device switch and sending information about the device (2) to the server side application (11), including an equipment information identifier,
b) detecting a new device active in the mobile network (1) on the basis of information about the new device sent from the client side application (8),
c) determining the handset capabilities of said device (2) by deriving the handset model of said device (2) from the equipment information identifier and reading the handset capabilities of said device in the database (13),
d) downloading of update information to said device (2) on the basis of the handset capabilities of said new device (2),
e) alerting said device (2) to connect to the device management server (3) in order to start a device management session.

2. Method of claim 1, wherein the mobile network (1) is the Global System for Mobile Communication, GSM.

3. Method of claim 1 or 2, wherein the device management system is a SyncML DM device management system.

4. Method of claim 1 or 2, wherein step a) is performed by identifying the device switch by means of a device identity comprising an equipment information identifier and a telephone number.

5. Method of claim 4, wherein said equipment information identifier is the IMEI and said telephone number is the MSISDN.

6. Method of claim 4, wherein said equipment information identifier is the IMEI, said telephone number is the MSISDN, and the subscription information identifier is the IMSI.

7. Method of claim 1 or 2, wherein step a) is performed by identifying the device switch by means of a device identity comprising an equipment information identifier, a telephone number, and a subscription information identifier of said new device.

8. Method of claim 1, wherein step b) is performed by checking if the detected device is new by comparing the device entity of the detected device with existing device entities in a Device identity Repository, DIR.

9. Method of any of claim 1, wherein the handset equipment identifier is the IMEI of the handset (5) and the database (13) is a Handset Capabilities Repository, HCR, database.

10. Method of any of claims 1-9, wherein the method comprises the further step of determining after step c) if said detected device is of relevance for device management on the basis of handset capability based policy.

11. Method of claim 10, wherein the handset capability used for the determination consists of the device management protocol capabilities.

12. Method of claim 11, wherein the device management protocol of concern is SyncML DM.

13. Method of claim 10, wherein the read handset capability used for the determination consists of over-the-air provisioning protocol capabilities.

14. Method of any of claims 10 -13, wherein the method is interrupted if on the basis of handset capability based policy, the handset capabilities of said new device are not of relevance in accordance with said policy.

15. Method of any of claims 11-13, wherein the downloading of update information in step d) is performed by provisioning of said new relevant device with connectivity parameters required to carry out device management sessions in the device management system.

16. Method of claim 15, wherein step d) is performed by using Short Message Service, SMS, point-to-point transport to carry out the over-the-air provisioning.

17. Method of any of claims 1-16, wherein step e) is performed by using the SyncML DM protocol to provision said new relevant device with the management alert.

18. Method of any of claims 1-17, wherein the management alert is carried over GSM SMS point-to-point transport over the mobile network (1) to said new relevant device.

19. Method of any of claims 1-18, wherein the method comprises the further step f) of starting said device management session mentioned in step e) between the new device (2) and the device management server (3).

20. Method of claim 19, wherein said device management session of step f) is carried out over the SyncML DM protocol.

21. Device management system for use in a mobile telecommunication network (1) for providing discovery of devices, the system comprising a device management server side application (11), a device management client side application (8), a device management user agent (7) and databases (13,14), **characterized by**
a) the client side application (8) running on a subscriber identity module, SIM (6), being a component for detection of switches of devices active in the mobile network (1),
b) a database (14) implementing a device identity repository,
c) a database (13) implementing a repository of handset capabilities,
d) the server application (11) being a component for downloading update information to devices in the network (1),
e) the server application (11) being a component for server initiated management alert to the device management user agent (7),
wherein the system is configured to perform a method according to anyone of the preceding claims.

22. System of claim 21, component a) is a SIM application (8) that stores a handset identifier in a persistent memory on the SIM card (6).

23. System of claim 21, wherein component a) is a Device Management Application, DMA, (8) running on the SIM card (6) and checking in what handset (5) the SIM card (6) resides.

24. System of claim 21, wherein component b) is a database (14) that stores the device identity, comprising the handset equipment identifier, the mobile network destination address and the subscription identifier.

25. System of claim 21, wherein component b) is a database (14) that stores the device identity, comprising the handset identifier, being the IMEI, the mobile destination address, being the MSISDN, and the subscription identifier, being the IMSI.

26. System of claim 21, wherein component b) is a device identity repository, DIR.

27. System of claim 21, wherein component c) is a database (13) that stores handset capabilities of all handset models in the mobile network (1) comprising the capabilities for device management protocol and over-the-air provisioning protocol support.

28. System of claim 21, wherein component c) is a Handset Capabilities Repository, HCR.

29. System of claim 21, wherein component d) is a server application (11) with the ability to derive from IMEI, which handset model the new device (2) is.

30. System of claim 21, wherein component d) is a server application (11) with the ability to provision the new device (2) with update information, such as connectivity parameters for SyncML DM.

## Patentansprüche

1. Verfahren zum Entdecken von neuen Geräten in einem Geräteverwaltungssystem in einem mobilen Telekommunikationsnetzwerk (1), das System aufweisend eine serverseitige Geräteverwaltungsapplikation (11), eine clientseitige Geräteverwaltungsapplikation (8), und Datenbanken (13, 14), wobei das Verfahren eine Kombination der folgenden Schritte aufweist:
a) die clientseitige Applikation (8) läuft auf einem Teilnehmeridentitätsmodul, SIM (6), und
detektiert einen Geräteschalter und übersendet Information über das Gerät (2) an die serverseitige Applikation (11), aufweisend eine Ausrüstungsinformationsidentifizierung,
b) Detektieren eines neuen Geräts, welches in dem mobilen Netzwerk (1) aktiv ist basierend auf Information über das neue Gerät, welche von der clientseitigen Applikation (8) übermittelt ist,
c) Bestimmen der Endgerätmöglichkeiten des Geräts (2) mittels Ableitens des Endgerätmodells des Geräts (2) aus der Ausrüstungsinformationsidentifizierung und Auslesens der Handapparatfähigkeiten des Geräts in der Datenbank (13),
d) Herunterladen von Aktualisierungsinformation an das Gerät (2) basierend auf den Handapparatfähigkeiten des neuen Geräts (2),
e) Benachrichtigen des Geräts (2) zum Verbinden mit dem Geräteverwaltungsserver (3), um eine Geräteverwaltungssitzung zu starten.

2. Verfahren nach Anspruch 1, wobei das mobile Netzwerk (1) ein Global System for Mobile Communication, GSM, ist.

3. Verfahren nach Anspruch 1 oder 2, wobei das Geräteverwaltungssystem ein SyncML DM Gerätemanagementsystem ist.

4. Verfahren nach Anspruch 1 oder 2, wobei Schritt a) mittels Identifizierens des Geräteschalters mittels einer Geräteidentifizierung aufweisend eine Ausrüstungsinformationsidentifizierung und eine Telefonnummer durchgeführt wird.

5. Verfahren nach Anspruch 4, wobei die Ausrüstungsinformationsidentifizierung eine IMEI und die Telefonnummer eine MSISDN ist.

6. Verfahren nach Anspruch 4, wobei die Ausrüstungsinformationsidentifizierung eine IMEI ist, die Telefonnummer eine MSISDN ist und die Teilnehmerinformationsidentifizierung eine IMSI ist.

7. Verfahren nach Anspruch 1 oder 2, wobei Schritt a) mittels Identifizierens des Geräteschalters mittels einer Geräteidentifizierung aufweisend eine Ausrüstungsinformationsidentifizierung, eine Telefonnummer, und eine Teilnehmerinformationsidentifizierung des neuen Geräts durchgeführt wird.

8. Verfahren nach Anspruch 1, wobei Schritt b) mittels Überprüfens, ob das detektierte Gerät neu ist mittels Vergleichens der Geräteentität des detektierten Geräts mit existierenden Geräteentitäten in einem Device Identity Repository, DIR, durchgeführt wird.

9. Verfahren nach Anspruch 1, wobei der Handapparatausrüstungsidentifizierer eine IMEI des Endgeräts (5) und die Datenbank (13) eine Handset Capabilities Repository, HCR, Datenbank ist.

10. Verfahren nach einem der Ansprüche 1 bis 9, wobei das Verfahren einen weiteren Schritt des Bestimmens auf Basis der Handapparatfähigkeiten basierten Policy nach Schritt c) aufweist, ob das detektierte Gerät von Relevanz für die Geräteverwaltung ist.

11. Verfahren nach Anspruch 10, wobei die Handapparatfähigkeiten, welche für das Bestimmen verwendet werden, Geräteverwaltungsprotokollmöglichkeiten aufweist.

12. Verfahren nach Anspruch 11, wobei das Geräteverwaltungsprotokoll von Interesse SyncML DM ist.

13. Verfahren nach Anspruch 10, wobei die ausgelesenen Handapparatfähigkeiten, welche zum Bestimmen verwendet wurden, aus Luftschnittstellenprotokollmöglichkeiten bestehen.

14. Verfahren nach einem der Ansprüche 10 bis 13, wobei das Verfahren angehalten wird, falls basierend auf der Handapparatfähigkeiten basierenden Policy die Handapparatfähigkeiten des neuen Geräts nicht von Relevanz in Abhängigkeit der Policy sind.

15. Verfahren nach einem der Ansprüche 11 bis 13, wobei das Herunterladen der Aktualisierungsinformation in Schritt d) ausgeführt wird mittels Bereitstellens des neuen relevanten Geräts mit Verbindungsparametern, welche zum Ausführen der Geräteverwaltungssitzung in dem Geräteverwaltungssystem notwendig sind.

16. Verfahren nach Anspruch 15, wobei Schritt d) mittels Verwendung von einem Short Message Service, SMS, Punkt-Zu-Punkt-Transport zum Ausführen der Luftschnittstellenbereitstellung ausgeführt wird.

17. Verfahren nach einem der Ansprüche 1 bis 16, wobei Schritt e) mittels Verwendung des SyncML DM Protokolls zum Bereitstellen des neuen relevanten Geräts mit der Verwaltungsbenachrichtigung durchgeführt wird.

18. Verfahren nach einem der Ansprüche 1 bis 17, wobei die Verwaltungsnachricht mittels einer GSM SMS Punkt-Zu-Punkt-Verbindung über das mobile Netzwerk (1) an das neue relevante Gerät übertragen wird.

19. Verfahren nach einem der Ansprüche 1 bis 18, wobei das Verfahren einen weiteren Schritt f) des Startens der Geräteverwaltungssitzung gemäß Schritt e) zwischen dem neuen Gerät (2) und dem Gerätemanagementserver (3) aufweist.

20. Verfahren nach Anspruch 19, wobei die Geräteverwaltungssitzung des Schritts f) über ein SyncML DM Protokoll ausgeführt wird.

21. Geräteverwaltungssystem zur Verwendung in einem mobilen Telekommunikationsnetzwerk (1) zum Bereitstellen eines Entdeckens von Geräten, das System aufweisend eine serverseitige Geräteverwaltungsapplikation (11), eine clientseitige Geräteverwaltungsapplikation (8), einen Geräteverwaltungsbenutzeragent (7) und Datenbanken (13, 14) **gekennzeichnet, durch**
a) die clientseitige Applikation (8) läuft auf einem Teilnehmeridentitätsmodul, SIM (6), als eine Komponente zum Detektieren von Schaltern der Geräte, welche in dem mobilen Netzwerk (1) aktiv sind,
b) eine Datenbank (14), welche ein Geräteidentifizierung-Repository implementiert,
c) eine Datenbank (13), welche ein Repository von Handapparatfähigkeiten implementiert,
d) die Serverapplikation (11) als eine Komponente zum Herunterladen von Aktualisierungsinformation an die Geräte in dem Netzwerk (1),
e) die Serverapplikation (11) als eine Komponente zum Initiieren einer Verwaltungsbenachrichtigung an den Geräteverwaltungsbenutzeragent (7),
wobei das System eingerichtet ist zum Ausführen eines Verfahrens gemäß einem der vorhergehenden Ansprüche.

22. System nach Anspruch 21, wobei Komponente a) eine SIM Applikation (8) ist, die eine Endgerätidentifizierung in einem persistenten Speicher auf der SIM-Karte (6) abspeichert.

23. System nach Anspruch 21, wobei die Komponente a) eine Device Management Application, DMA, (8) ist, welche auf der SIM-Karte (6) läuft und überprüft, in welchem Endgerät (5) die SIM-Karte (6) residiert.

24. System nach Anspruch 21, wobei die Komponente b) eine Datenbank (14) ist, die die Geräteidentifizierung aufweisend die Endgerätausrüstungsidentifizierung, die mobile Netzwerkzieladresse und die Teilnehmeridentifizierung abspeichert.

25. System nach Anspruch 21, wobei die Komponente b) eine Datenbank (14) ist, die die Geräteidentifizierung aufweisend die Endgerätidentifizierung, vorliegend als IMEI, die mobile Zieladresse, vorliegend als MSISDN, und die Teilnehmeridentifizierung, vorliegend als IMSI, abspeichert.

26. System nach Anspruch 21, wobei die Komponente b) ein Geräteidentifizierungs-Repository, DIR, ist.

27. System nach Anspruch 21, wobei die Komponente c) eine Datenbank (13) ist, die Handapparatfähigkeiten von allen Endgerätmodellen in dem mobilen Netzwerk (1) aufweisend die Fähigkeiten des Geräteverwaltungsprotokolls und Luftschnittstellenbereitstellungprotokollunterstützung abspeichert.

28. System nach Anspruch 21, wobei die Komponente c) ein Handset Capabilities Repository, HCR, ist.

29. System nach Anspruch 21, wobei die Komponente d) eine Serverapplikation (11) ist, mit Fähigkeit zum Ableiten von der IMEI, von welchem Endgerätmodell das neue Gerät (2) ist.

30. System nach Anspruch 21, wobei die Komponente d) eine Serverapplikation (11) ist, mit der Fähigkeit, dem neuen Gerät (2) Aktualisierungsinformation wie Verbindungsparameter für SyncML DM, bereitzustellen.

## Revendications

1. Procédé de découverte de nouveaux dispositifs dans un système de gestion de dispositif dans un réseau de télécommunications mobiles (1), le système comprenant une application côté serveur de gestion de dispositif (11), une application côté client de gestion de dispositif (8), et des bases de données (13, 14), dans lequel le procédé comprend les étapes suivantes en combinaison
a) l'application côté client (8) fonctionnant sur un module d'identité d'abonné, SIM (6), détectant un interrupteur de dispositif et envoyant des informations concernant le dispositif (2) à l'application côté serveur (11), incluant un identifiant d'informations d'équipement ;
b) la détection d'un nouveau dispositif actif dans le réseau mobile (1) sur la base d'informations concernant le nouveau dispositif envoyées à partir de l'application côté client (8) ;
c) la détermination des capacités de combiné dudit dispositif (2) en dérivant le modèle de combiné dudit dispositif (2) à partir de l'identifiant d'informations d'équipement et en lisant les capacités de combiné dudit dispositif dans la base de données (13) ;
d) le téléchargement d'informations de mise à jour vers ledit dispositif (2) sur la base des capacités de combiné dudit nouveau dispositif (2), et
e) l'alerte vers ledit dispositif (2) pour un connexion au serveur de gestion de dispositif (3) afin de lancer une session de gestion de dispositif.

2. Procédé selon la revendication 1, dans lequel le réseau mobile (1) est le Global System for Mobile Communication, GSM (Système mondial de communication avec les mobiles).

3. Procédé selon la revendication 1 ou 2, dans lequel le système de gestion de dispositif est un système de gestion de dispositif SyncML DM.

4. Procédé selon la revendication 1 ou 2, dans lequel l'étape a) est exécutée en identifiant l'interrupteur de dispositif au moyen d'une identité de dispositif comprenant un identifiant d'informations d'équipement et un numéro de téléphone.

5. Procédé selon la revendication 4, dans lequel ledit identifiant d'informations d'équipement est l'IMEI et ledit numéro de téléphone est le MSISDN.

6. Procédé selon la revendication 4, dans lequel ledit identifiant d'informations d'équipement est l'IMEI, ledit numéro de téléphone est le MSISDN, et l'identifiant d'informations d'abonnement est l'IMSI.

7. Procédé selon la revendication 1 ou 2, dans lequel l'étape a) est exécutée en identifiant l'interrupteur de dispositif au moyen d'une identité de dispositif comprenant un identifiant d'informations d'équipement, un numéro de téléphone, et un identifiant d'informations d'abonnement dudit nouveau dispositif.

8. Procédé selon la revendication 1, dans lequel l'étape b) est exécutée en vérifiant si le dispositif détecté est nouveau en comparant l'entité de dispositif du dispositif détecté avec des entités de dispositif existantes dans un référentiel d'identités de dispositifs, DIR.

9. Procédé selon la revendication 1, dans lequel l'identifiant d'équipement de combiné est l'IMEI du combiné (5), et la base de données (13) est une base de données pour Handset Capabilities Repository (référentiel de capacités de combiné), HCR.

10. Procédé selon l'une quelconque des revendications 1 à 9, dans lequel le procédé comprend l'étape supplémentaire consistant en la détermination après l'étape c) de si ledit dispositif détecté est pertinent pour la gestion de dispositif sur la base d'une politique reposant sur les capacités de combiné.

11. Procédé selon la revendication 10, dans lequel la capacité de combiné utilisée pour la détermination consiste en les capacités de protocole de gestion de dispositif.

12. Procédé selon la revendication 11, dans lequel le protocole de gestion de dispositif concerné est SyncML DM.

13. Procédé selon la revendication 10, dans lequel la capacité de combiné lue utilisée pour la détermination consiste en les capacités de protocole de dotation par liaison radio.

14. Procédé selon l'une quelconque des revendications 10 à 13, dans lequel le procédé est interrompu si, sur la base de la politique reposant sur les capacités de combiné, les capacités de combiné dudit nouveau dispositif ne sont pas pertinentes conformément à ladite politique.

15. Procédé selon l'une quelconque des revendications 11 à 13, dans lequel le téléchargement d'informations de mise à jour de l'étape d) est exécuté en dotant ledit nouveau dispositif pertinent de paramètres de connectivité requis pour effectuer des sessions de gestion de dispositif dans le système de gestion de dispositif.

16. Procédé selon la revendication 15, dans lequel l'étape d) est exécutée en utilisant le service Short Message Servie, SMS, comme transport de point à point pour effectuer la dotation par liaison radio.

17. Procédé selon l'une quelconque des revendications 1 à 16, dans lequel l'étape e) est exécutée en utilisant le protocole SyncML DM pour doter ledit nouveau dispositif pertinent de l'alerte de gestion.

18. Procédé selon l'une quelconque des revendications 1 à 17, dans lequel l'alerte de gestion est effectuée via un transport point à point GSM SMS sur le réseau mobile (1) vers ledit nouveau dispositif pertinent.

19. Procédé selon l'une quelconque des revendications 1 à 18, dans lequel le procédé comprend l'étape supplémentaire f) destinée à lancer ladite session de gestion de dispositif mentionnée à l'étape e) entre le nouveau dispositif (2) et le serveur de gestion de dispositif (3).

20. Procédé selon la revendication 19, dans lequel ladite session de gestion de dispositif de l'étape f) est effectuée via le protocole SyncML DM.

21. Système de gestion de dispositif à utiliser dans un réseau de télécommunications mobiles (1) destiné à fournir une découverte de dispositifs, le système comprenant une application côté serveur de gestion de dispositif (11), une application côté client de gestion de dispositif (8), un agent utilisateur de gestion de dispositif (7), et des bases de données (13, 14), **caractérisé par**
a) l'application côté client (8) fonctionnant sur un module d'identité d'abonné, SIM (6), étant un composant destiné à la détection d'interrupteurs de dispositifs actifs dans le réseau mobile (1) ;
b) une base de données (14) mettant en oeuvre un référentiel d'identités de dispositifs ;
c) une base de données (13) mettant en oeuvre un référentiel de capacités de combiné ;
d) l'application de serveur (11) étant un composant destiné au téléchargement d'informations de mise à jour vers des dispositifs dans le réseau (1) ;
e) l'application de serveur (11) étant un composant pour l'alerte de gestion initialisée par serveur vers l'agent utilisateur de gestion de dispositif (7),
dans lequel le système est configuré pour exécuter un procédé selon l'une quelconque des revendications précédentes.

22. Système selon la revendication 21, dans lequel le composant a) est une application SIM (8) qui stocke un identifiant de combiné dans une mémoire persistante sur la carte SIM (6).

23. Système selon la revendication 21, dans lequel le composant a) est une Device Management Application (application de gestion de dispositif), DMA, (8) fonctionnant sur la carte SIM (6) et vérifiant dans quel combiné (5) réside la carte SIM (6).

24. Système selon la revendication 21, dans lequel le composant b) est une base de données (14) qui stocke l'identité de dispositif, comprenant l'identifiant d'équipement de combiné, l'adresse de destination de réseau mobile et l'identifiant d'abonnement.

25. Système selon la revendication 21, dans lequel le composant b) est une base de données (14) qui stocke l'identité de dispositif, comprenant l'identifiant de combiné, étant l'IMEI, l'adresse de destination mobile, étant le MSISDN, et l'identifiant d'abonnement, étant l'IMSI.

26. Système selon la revendication 21, dans lequel le composant b) est un référentiel d'identité de dispositif, DIR.

27. Système selon la revendication 21, dans lequel le composant c) est une base de données (13) qui stocke des capacités de combiné de tous les modèles de combiné dans le réseau mobile (1), comprenant les capacités pour le protocole de gestion de dispositif et le support de protocole de dotation par liaison radio.

28. Système selon la revendication 21, dans lequel le composant c) est un Handset Capabilities Repository (référentiel de capacités de combiné), HCR.

29. Système selon la revendication 21, dans lequel le composant d) est une application de serveur (11) en mesure de dériver à partir de l'IMEI quel est le modèle de combiné du nouveau dispositif (2).

30. Système selon la revendication 21, dans lequel le composant d) est une application de serveur (11) en mesure de doter le nouveau dispositif (2) d'informations de mise à jour telles que des paramètres de connectivité pour SyncML DM.
